# EUROPÄISCHE PATENTSCHRIFT

(11) **EP 3 041 907 B1**
(45) Veröffentlichungstag und Bekanntmachung des Hinweises auf die Patenterteilung: **14.06.2017**
(21) Anmeldenummer: 14790490.8
(22) Anmeldetag: 03.09.2014
(51) Int. Cl.: C09D 161/32, C08G 12/42, C09D 133/14, C09D 167/00, C09D 167/04, C09D 175/04, C09D 169/00, C09D 171/00

(54) **BESCHICHTUNGSSTOFFE UND DEREN VERWENDUNG IN BESCHICHTUNGSSYSTEMEN FÜR BAUTEILE IN FAHRZEUGINNENRÄUMEN**
COATING MATERIALS AND THE USE THEREOF IN COATING SYSTEMS FOR COMPNENTS IN VEHICLE INTERIORS
SUBSTANCES DE REVÊTEMENT ET UTILISATION DESDITES SUBSTANCES DE REVÊTEMENT DANS DES SYSTÈMES DE REVÊTEMENT POUR DES ÉLÉMENTS POUR L'HABITACLE DE VÉHICULES

(30) Priorität: 05.09.2013 DE 102013014683
(43) Veröffentlichungstag der Anmeldung: 13.07.2016
(73) Patentinhaber: Mankiewicz Gebr. & Co. GmbH & Co. KG, 21107 Hamburg (DE)
(72) Erfinder: KARL, Hans-Juergen, 20249 Hamburg (DE)
(86) Internationale Anmeldenummer: PCT/DE2014/000450
(87) Internationale Veröffentlichungsnummer: WO 2015/032379

(56) Entgegenhaltungen:
- WO-A1-2012/036183
- DE-A1-102008 016 050
- JP-A- H 111 632
- US-A1- 2008 090 956
- US-A1- 2011 178 238

## Beschreibung

Die vorliegende Erfindung betrifft Beschichtungsstoffe zur Beschichtung von Bauteiloberflächen, insbesondere zur Beschichtung von Interieurbauteilen in Fahrzeugen zum Personentransport. Die Erfindung betrifft ebenfalls deren Verwendung in Beschichtungssystemen sowie Verfahren zur Herstellung von beschichteten Bauteilen.

Bauteile, welche zum Ausbau oder zur Verkleidung in Innenräumen von Fahrzeugen zum Personentransport eingesetzt werden, werden im Folgenden als Interieurbauteile bezeichnet. Für Personentransportfahrzeuge gelten in der Regel Brandschutzbestimmungen, denen die im Innenbereich eingesetzten Interieurbauteile entsprechend müssen. Die Anforderungen an die Entflammbarkeit, Rauchentwicklung und Toxizität der im Brandfall freigesetzten Stoffe werden üblicherweise als FST-Eigenschaften (Flammability, Smoke, Toxicity) bezeichnet. Dabei ist die Flammfestigkeit die Eigenschaft von Werkstoffen, Produkten oder Bauteilen, der Einwirkung von Flammen oder Zündquellen zu widerstehen bzw. die Fähigkeit, auf energetischem, kinetischem, chemischen oder mechanischem Weg die Ausbreitung von Feuer zu verhindern. Die Prüfverfahren für die Flammfestigkeit ahmen unter reproduzierbaren Bedingungen die Verhältnisse bei einem praktischen Brand nach. Dabei werden je nach Prüfverfahren unterschiedliche physikalisch-chemische Daten erfasst wie beispielsweise die Entflammungs- und Entzündungstemperatur oder die Zusammensetzung der Pyrolysatdämpfe.

Üblicherweise werden zum Ausbau oder zur Verkleidung von Fahrzeuginnenräumen Interieurbauteile aus Kunststoff, Faserverbundwerkstoff oder Metall verwendet. Zur Ausstattung bzw. optischen Gestaltung des Fahrzeuginnenraums werden die sichtbaren Oberflächen der eingesetzten Bauteile in der Regel mit einem individuellen Dekor versehen. Dabei kann ein Dekor sowohl farbliche Muster als auch dreidimensionale Strukturen der Oberfläche umfassen.

Bekannt ist die Farbgestaltung von Bauteiloberflächen für Innenraumverkleidungen insbesondere für Kabinen von Luftfahrzeugen durch Kaschieren oder Auflaminieren von farblich gestalteten, gegebenenfalls strukturierten Folien. In einem weiteren, bisher üblichen Verfahren werden Interieurbauteile durch das Aufbringen von FST-gerechten Zweikomponentenbeschichtungsstoffen dekoriert. Die üblicherweise eingesetzten Beschichtungssysteme bestehen aus zwei Füllerschichten und zwei Decklackschichten, wobei die zweite Decklackschicht zum Aufbringen einer Oberflächenstruktur dient. Dadurch hat dieser Aufbau ein hohes Flächengewicht. Das ist besonders nachteilig in Fahrzeugen, bei denen das Gewicht eine Rolle spielt wie zum Beispiel bei Luftfahrzeugen. Ein weiterer Nachteil der üblichen Beschichtungssysteme sind die langen Prozesszeiten der Applikationsverfahren, die durch die erforderlichen Ablüft- und Härtungszeiten jeder einzelnen Schichten bedingt sind. Darüber hinaus müssen Füllerschichten vor dem Auftrag der jeweils nächsten Schicht geschliffen werden, um eine glatte Oberfläche zu erhalten. Somit sind die bisher üblichen Verfahren sehr arbeitsaufwendig und entsprechend teuer.

Aus der DE 10 2009 050 601 A1 ist die Verwendung von Pulverlacken zur Beschichtung von Bauteiloberflächen bekannt. Die Pulverlacke werden in elektrostatischen Pulverbeschichtungsverfahren auf die Bauteiloberflächen aufgebracht und bei einer Temperatur von 130 °C gehärtet. Übliche Pulverlacke müssen bei vergleichsweise hohen Temperaturen im Bereich von 130 bis 160 ° gehärtet werden, so dass dieses Verfahren zur Beschichtung von Bauteilen aus Kunststoffen nur bedingt geeignet ist.

Es ist daher Aufgabe der vorliegenden Erfindung, verbesserte Beschichtungen für Interieurbauteile zur Verfügung zu stellen, die unter Beibehaltung der erforderlichen FST-Eigenschaften insbesondere ein geringeres Gewicht aufweisen und einfacher zu applizieren sind. Gelöst wird diese Aufgabe durch Beschichtungsstoffe gemäß Hauptanspruch, ihre Verwendung gemäß Nebenanspruch sowie durch Applikationsverfahren gemäß Nebenanspruch. Bevorzugte Ausführungsformen werden in den Unteransprüchen und der Beschreibung offenbart.

Die erfindungsgemäßen Beschichtungsstoffe werden zur Herstellung von einkomponentigen Brandschutzdecklacken eingesetzt. Im Folgenden wird der Begriff "Brandschutz" im Zusammenhang mit Beschichtungen und Beschichtungssystemen für solche Beschichtungen und Beschichtungssysteme verwendet, welche die in der Luftfahrtindustrie festgesetzten FST-Eigenschaften bzw. FST-Werte (Brennbarkeit, Rauchgasdichte, Wärmefreisetzung und Toxizität der Rauchgase) aufweisen.

Um die für den Interieurbereich geforderten FST-Werte zu erhalten, werden üblicherweise Beschichtungsstoffe auf der Basis von zweikomponentigen Polyurethansystemen eingesetzt. Im Unterschied dazu weisen die erfindungsgemäßen Beschichtungsstoffe nur eine Komponente auf, die als Bindemittel eine Kombination aus Polyolen, veretherten Melamin-Formaldehyd-Harzen und Säurekatalysatoren enthält. Die Kombination umfasst dabei 10 bis 30 Gew.-% Polyole, 2 bis 15 Gew.-% veretherte Melamin-Formaldehyd-Harze, 0,1 bis 10 Gew.-% Säurekatalysatoren sowie hinreichende Mengen an Flammschutzmitteln oder an Flammschutzmitteln und Füllstoffen oder an Flammschutzmitteln und Pigmenten oder an Flammschutzmitteln, Füllstoffen und Pigmenten, um einen Füllgrad von 60 bis 80 Gew.-%, bevorzugt 65 bis 75 Gew.-%, zu erreichen wobei die Flammschutzmittel ausgewählt sind aus der Gruppe enthaltend anorganische Flammschutzmittel, halogen-, stickstoff- und borhaltige Flammschutzmittel, intumeszierende Flammschutzmittel oder deren Gemischte. Bevorzugt weist die Kombination 12 bis 25 Gew.-% Polyole, 3 bis 10 Gew.-% veretherte Melamin-Formaldehyd-Harze und 0,3 bis 5 Gew.-% Säurekatalysatoren auf.

Geeignete Polyole sind Polyacrylat-Polyole, Polyester-Polyole, Polyether-Polyole, Polycarbonate-Polyole, Polycaprolactone sowie Polyurethanpolyole. Bevorzugt werden Polyacrylat-Polyole und Polyester-Polyole eingesetzt. Besonders bevorzugt sind Polyester-Polyole auf Basis von Phthalsäure.

Geeignete Melaminharze sind veretherte Melamin-Formaldehyd-Harze insbesondere methanolveretherte, ethanolveretherte, propanolveretherte, iso-butanolveretherte und n-butanolveretherte Melamin-Formaldehyd-Harze. Besonders bevorzugt sind methanolveretherte, iso-butanolveretherte und n-butanolveretherte Melamin-Formaldehyd-Harze. Ganz besonders bevorzugt werden methanolveretherte Melamin-Formaldehyd-Harze eingesetzt.

Geeignete Säurekatalysatoren sind starke organische Broenstedt-Säuren. Bevorzugt sind organische Sulfonsäuren. Besonders bevorzugt wird Dinonylnaphthalindisulfonsäure oder p-Toluolsulfonsäure eingesetzt.

In einer Ausführungsform der Erfindung umfassen die Kombinationen Polyacrylat-Polyole, methanolveretherte Melamin-Formaldehyd-Harze und Dinonylnaphthalindisulfonsäure oder p-Toluolsulfonsäure. In einer weiteren Ausführungsform umfassen sie Polyacrylat-Polyole, ethanolveretherte Melamin-Formaldehyd-Harze sowie Dinonylnaphthalindisulfonsäure oder p-Toluolsulfonsäure. In einer weiteren Ausführungsform umfassen sie Polyacrylat-Polyole, propanolveretherte Melamin-Formaldehyd-Harze und Dinonylnaphthalindisulfonsäure oder p-Toluolsulfonsäure. In einer weiteren Ausführungsform umfassen sie Polyacrylat-Polyole, butanolveretherte Melamin-Formaldehyd-Harze und Dinonylnaphthalindisulfonsäure oder p-Toluolsulfonsäure.

In einer Ausführungsform der Erfindung umfassen die Kombinationen Polyester-Polyole, methanolveretherte Melamin-Formaldehyd-Harze und Dinonylnaphthalindisulfonsäure oder p-Toluolsulfonsäure. In einer weiteren Ausführungsform umfassen sie Polyester-Polyole, ethanolveretherte Melamin-Formaldehyd-Harze sowie Dinonylnaphthalindisulfonsäure oder p-Toluolsulfonsäure. In einer weiteren Ausführungsform umfassen sie Polyester-Polyole, propanolveretherte Melamin-Formaldehyd-Harze und Dinonylnaphthalindisulfonsäure oder p-Toluolsulfonsäure. In einer weiteren Ausführungsform umfassen sie Polyester-Polyole, butanolveretherte Melamin-Formaldehyd-Harze und Dinonylnaphthalindisulfonsäure oder p-Toluolsulfonsäure.

In einer Ausführungsform der Erfindung umfassen die Kombinationen Polyether-Polyole, methanolveretherte Melamin-Formaldehyd-Harze und Dinonylnaphthalindisulfonsäure oder p-Toluolsulfonsäure. In einer weiteren Ausführungsform umfassen sie Polyether-Polyole, ethanolveretherte Melamin-Formaldehyd-Harze sowie Dinonylnaphthalindisulfonsäure oder p-Toluolsulfonsäure. In einer weiteren Ausführungsform umfassen sie Polyether-Polyole, propanolveretherte Melamin-Formaldehyd-Harze und Dinonylnaphthalindisulfonsäure oder p-Toluolsulfonsäure. In einer weiteren Ausführungsform umfassen sie Polyether-Polyole, butanolveretherte Melamin-Formaldehyd-Harze und Dinonylnaphthalindisulfonsäure oder p-Toluolsulfonsäure.

In einer Ausführungsform der Erfindung umfassen die Kombinationen Polycarbonat-Polyole, methanolveretherte Melamin-Formaldehyd-Harze und Dinonylnaphthalindisulfonsäure oder p-Toluolsulfonsäure. In einer weiteren Ausführungsform umfassen sie Polycarbonat-Polyole, ethanolveretherte Melamin-Formaldehyd-Harze sowie Dinonylnaphthalindisulfonsäure oder p-Toluolsulfonsäure. In einer weiteren Ausführungsform umfassen sie Polycarbonat-Polyole, propanolveretherte Melamin-Formaldehyd-Harze und Dinonylnaphthalindisulfonsäure oder p-Toluolsulfonsäure. In einer weiteren Ausführungsform umfassen sie Poly-carbonat-Polyole, butanolveretherte Melamin-Formaldehyd-Harze und Dinonylnaphthalindisulfonsäure oder p-Toluolsulfonsäure.

In einer Ausführungsform der Erfindung umfassen die Kombinationen Polycaprolactone, methanolveretherte Melamin-Formaldehyd-Harze und Dinonylnaphthalindisulfonsäure oder p-Toluolsulfonsäure. In einer weiteren Ausführungsform umfassen sie Polycaprolactone, ethanolveretherte Melamin-Formaldehyd-Harze sowie Dinonylnaphthalindisulfonsäure oder p-Toluolsulfonsäure. In einer weiteren Ausführungsform umfassen sie Polycaprolactone, propanolveretherte Melamin-Formaldehyd-Harze und Dinonylnaphthalindisulfonsäure oder p-Toluolsulfonsäure. In einer weiteren Ausführungsform umfassen sie Polycaprolactone, butanolveretherte Melamin-Formaldehyd-Harze und Dinonylnaphthalindisulfonsäure oder p-Toluolsulfonsäure.

In einer Ausführungsform der Erfindung umfassen die Kombinationen Polyurethanpolyole, methanolveretherte Melamin-Formaldehyd-Harze und Dinonylnaphthalindisulfonsäure oder p-Toluolsulfonsäure. In einer weiteren Ausführungsform umfassen sie Polyurethanpolyole, ethanolveretherte Melamin-Formaldehyd-Harze sowie Dinonylnaphthalindisulfonsäure oder p-Toluolsulfonsäure. In einer weiteren Ausführungsform umfassen sie Polyurethanpolyole, propanolveretherte Melamin-Formaldehyd-Harze und Dinonylnaphthalindisulfonsäure oder p-Toluolsulfonsäure. In einer weiteren Ausführungsform umfassen sie Polyurethanpolyole, butanolveretherte Melamin-Formaldehyd-Harze und Dinonylnaphthalindisulfonsäure oder p-Toluolsulfonsäure.

Die erfindungsgemäßen Beschichtungsstoffe können überraschend hohe Anteile an Festkörpern aufnehmen, ohne dass die Eigenschaften der ausgehärteten Beschichtung beeinträchtigt werden. Das heißt zusätzlich zu den üblichen Pigmenten und Füllstoffen werden auch noch Flammschutzmittel in ausreichender Menge zugegeben, ohne dass die chemischen und mechanischen Eigenschaften der ausgehärteten Beschichtung beeinträchtigt werden.

Erfindungsgemäß geeignet sind alle bekannten und dem Fachmann geläufigen organischen Pigmente wie zum Beispiel Arylamidgelb, Diarylidgelb, Nickelazogelb, Anthrapyrimidingelb, Pyranthrongelb, Isoindolinongelb, Arylamidorange, Diarylidorange, Azokondensationsorange, Anthanthronorange, Pyrenthronorange, Trans-Perinonorange, Chinacridonorange, Isoindolinonorange, Toluidinrot, Litholrot, Naphthol-AS-Rot, Azokondensationsrot, Perylenrot, Thioindigorot, Chinacridonrot, Isoindolinonrot, Isoviolanthronviolett, Indanthrenviolett, Chinacridonviolett, Dioxazinviolett, Phthalocyaninblau, Indanthrenblau, Phthalocyaningrün, Knochenschwarz oder Anilinschwarz. Erfindungsgemäß geeignet sind weiterhin alle bekannten und dem Fachmann geläufigen anorganischen Pigmente wie zum Beispiel Titandioxid, Zinksulfid, Lithopone, basisches Bleicarbonat, basisches Bleisulfat, basisches Bleisilikat, Zinkoxid, Antimonoxid, Eisenoxidgelb, Chromgelb, Cadmiumgelb, Nickeltitangelb, Chromorange, Molybdatorange, Cadmiumorange, Eisenoxidrot, Cadmiumrot, Kupferoxid, Molybdatrot, Ultramarinrot, Mischphasenrot, Mineralviolett, Manganviolett, Ultramarinviolett, Eisenblau, Ultramarinblau, Kobaltblau, Chromoxidgrün, Chromoxidhydratgrün, Ultramaringrün, Mischphasengrünpigmente, Eisenoxidbraun, Mischphasenbraun, Eisenoxidschwarz, Antimonsulfid, Graphit, Gasruß, Thermalruß, Ofenruß, Flammruß oder Acetylenruß. Bevorzugt sind anorganische Pigmente insbesondere Titandioxid, Zinksulfid, Lithopone, Zinkoxid, Antimonoxid, Eisenoxidgelb, Nickeltitangelb, Molybdatorange, Eisenoxidrot, Kupferoxid, Molybdatrot, Ultramarinrot, Mischphasenrot, Mineralviolett, Manganviolett, Ultramarinviolett, Eisenblau, Ultramarinblau, Kobaltblau, Chromoxidgrün, Chromoxidhydratgrün, Ultramaringrün, Mischphasengrünpigmente, Eisenoxidbraun, Mischphasenbraun, Eisenoxidschwarz, Antimonsulfid, Graphit, Gasruß, Thermalruß, Ofenruß, Flammruß oder Acetylenruß.

Geeignete Füllstoffe sind beispielsweise Carbonate wie Kreide, Kalksteinmehl, Calcit, gefälltes Calciumcarbonat, Dolomit, Bariumcarbonat, Sulfate wie Baryt, Blanc fixe, Calciumsulfat, Silikate wie Talk, Pyrophyllit, Chlorit, Hornblende, Glimmer, Kaolin, Wollastonit, Schiefermehl, gefällte Calciumsilikate, gefällte Aluminiumsilikate, gefällte Calcium-Aluminiumsilikate, gefällte Natrium-Aluminiumsilikate, Feldspäte, Mullit, Kieselsäuren wie Quarz, Quarzgut, Cristobalit, Kieselgur, Kieselerde, gefällte Kieselsäure, pyrogene Kieselsäure, Bimsmehl, Perlit, Calcium-Metasilikate, Fasern aus Schmelzen von Glas oder Basalten, Glasmehl, Glaskugeln und Schlacken.

Geeignete Flammschutzmittel sind anorganische Flammschutzmittel, halogen-, stickstoff- oder borhaltige Flammschutzmittel, intumeszierende Flammschutzmittel oder deren Gemische. Geeignete anorganische Flammschutzmittel sind beispielsweise nicht brennbare anorganische Füllstoffe wie z.B. Oxide, Hydroxide, Oxid-Hydrate, Mischoxide, Sulfide, Sulfate, Carbonate, Phosphate, Fluoride von Mg, Ca, Sr, Ba, Ti, V, Cr, Mn, Fe, Co, Ni, Cu, Zn, Zr, Nb, Mo, Cd, W, Hg, Al, Ga, In, Si, Ge, Sn, Pb, Sb, Bi, Aluminiumoxide(-hydroxide), Magnesiumoxid, Aluminiumtrihydroxid, Magnesiumdihydroxid, Metallphosphate, Ammoniumpolyphoshate, Borate, Zinkborate, Natriumtetraborat Decahydrat, Antimontrioxid, Antimonpentoxid und roter Phosphor. Geeignete halogenhaltige Flammschutzmittel sind beispielsweise Decabromdiphenyloxid, Ethan-1,2-bis(pentabromphenol), Ethylenbis-tetrabromphthalimid, bromiertes Polystyrol, Tribromdiphenylether, Tetrabromdiphenylether, Pentabromdiphenylether, Hexabromdiphenylether, Heptabromdiphenylether, Octabromdiphenylether, Nonabromdiphenylether, Decabromdiphenylether, Tetrabrombisphenol A und seine Derivate, polybromierte Biphenyle wie z.B. Decabrombiyphenyl, Hexabromcyclododecan, Tetrabromphthalsäureanhydrid TBPA, TBPA-diester/ether, Ethylenbis(tetra-bromphthalimide) EBTBP, Salze von Tetrabromphthalaten, Dibromethyldibromcyclohexan, Ethylen-bis(dibromnorbornan-dicarboximid), Dibromneopentylglycol DBNPG, Tribromneopentylalkohol TBNPA, Vinylbromid VBr, 2,4,6-Tribromphenol TBP, Bis(tribromphenoxy)ethan HBPE, Tribromophenylallylether TBP-AE, Poly(dibromphenylenoxid) PDBPO, Pentabromethylbenzol 5BEB, Tetradecabromdiphenoxybenzol TDBDPB, Poly(pentabrombenzylacrylate) PBB-PA und Polydibromstyrol PDBS. Geeignete stickstoffhaltige Flammschutzmittel sind beispielsweise Melamin und Melaminsalze der Borsäure, Phosphorsäure und anderer anorganischer Säuren. Geeignete phosphorhaltige Flammschutzmittel sind beispielsweise Phosphorsäureester, Triphenylphosphat, Tricresylphosphat, Resorcinol-bis(diphenylphosphat), (2-((Hydroxymethyl)-carbamyl)ethyl)phosphonsäuredimethylester, Tetra-phenylresorcinolbis(diphenylphosphat) und organische Phosphinate. Geeignete borhaltige Flammschutzmittel sind beispielsweise, Borax, Borate, Zinkborat, Bariummetaborat, Calciummetaborat, Natriumtetrafluorborat und Kaliumtetrafluorborat. Geeignete intumeszierende Flammschutzmittel sind beispielsweise reines Melamin, Melaminmonophosphat, Melaminpolyphosphat, Melamincyanurat, Melaminpyrophosphat und expandierbarer Graphit. Besonders bevorzugte Flammschutzmittel sind beispielsweise Hydroxide, Oxid-Hydrate und Borate von Al, Mg und Zn, Antimonpentoxid, Tetradecabromdiphenoxybenzol, bromiertes Polystyrol, Polydibromstyrol PDBS, Decabromdiphenylether, polybromierte Biphenyle und Mischungen aus zwei oder mehreren der vorgenannten Flammschutzmittel.

Weiterhin können die erfindungsgemäßen Beschichtungsstoffe die üblichen und dem Fachmann geläufigen Hilfsstoffe und Additive aufweisen wie beispielsweise Netzmittel, Rheologieadditive oder Haftvermittler. Die Beschichtungsstoffe können dabei bis zu 21 Gew.-% Additive und Hilfsstoffe bezogen auf die Gesamtmasse des Beschichtungsstoffs enthalten.

Die aus den erfindungsgemäßen Beschichtungsstoffen erhaltenen Beschichtungen weisen hohe Kratzbeständigkeiten und hohe Abriebfestigkeiten auf. Neben diesen mechanischen Eigenschaften zeigen sie hohe Chemikalien-, Wasser- und Lösemittelbeständigkeiten. Sie sind damit sehr gut zu reinigen, was insbesondere bei Oberflächen im Interieurbereich erwünscht ist.

Weiterhin können die erfindungsgemäßen Beschichtungsstoffe durch den Zusatz von nichtionischen Silberpartikeln antimikrobiell ausgestattet werden. Bevorzugt eingesetzte Silberpartikel sind anorganisch modifiziert. Besonders bevorzugt weisen sie eine spezifische Oberfläche im Bereich von 3 bis 5 m²/g, einen Medianwert der Partikelagglomerate(d50) im Bereich von 3,5 bis 18 µm sowie eine Partikelgrößenverteilung RSF = (d90-d10)/d50 im Bereich von 1 bis 3,5 auf. Die modifizierten Silberpartikel können in 0,1 bis 0,5 Gew.-% bezogen auf die Gesamtmasse des Beschichtungsstoffs eingesetzt werden. Bei Einsatzmengen unter 0,1 Gew.-% wird keine ausreichende Wirkung erhalten; bei Mengen über 0,5 Gew.-% ist eine Vergrauung insbesondere bei hellen Farbtönen zu beobachten.

Die erfindungsgemäßen Beschichtungsstoffe haben weiterhin eine unerwartet niedrige Viskosität. Daher müssen nur noch geringe Mengen an Lösungsmitteln zugesetzt werden, um die Viskosität des Beschichtungsstoffes einzustellen, die für die Applikation beispielsweise im Spritzverfahren oder in elektrostatischen Verfahren notwendig ist. Geeignete Lösungsmittel sind bekannt und dem Fachmann geläufig wie beispielsweise aliphatische Kohlenwasserstoffe, aromatische Kohlenwasserstoffe, hydroaromatische Kohlenwasserstoffe, Terpenkohlenwasserstoffe, Alkohole, Ester, Ether, Glykolether und Ketone. Bevorzugt werden Xylol, Butylacetat, Dimethylbenzol, Ethylbenzol, Essigsäurebutylester, Dibutyldiglycolacetat und Diacetonalkohol. Der Anteil an leichtflüchtigen organischen Komponenten (volatile organic components VOC) liegt zwischen 335 bis 435 g/l, bevorzugt bei etwa 380 g/l. Der geringe Anteil an flüchtigen organischen Lösemittel ist auch in den Applikation- und Aushärtungsverfahren vorteilhaft, da die Ablüftzeiten zwischen der Applikation des Beschichtungsstoffes und dem Aushärten zur Beschichtung vor allem von der Menge der abzudampfenden Lösungsmittel abhängen.

Die erfindungsgemäßen Beschichtungsstoffe weisen Festkörpergehalte von 60 bis 85 Gew.-%, bevorzugt 70 bis 80 Gew.-%, besonders bevorzugt ca. 75 Gew.-%. Sie haben ein Pigmentvolumenverhältnis 35 bis 60 %, bevorzugt bei 50 %. Das Pigmentvolumenverhältnis ist dabei definiert als der Quotient aus dem Volumen der Pigmente und Farbstoffe und dem Volumen des gesamten ausgehärteten Films. Die erfindungsgemäßen Beschichtungen haben eine Trockenschichtdicke von maximal 150 µm, wobei sie besonders hohe Beständigkeiten gegenüber mechanischen und chemischen Einflüssen aufweisen. Weiterhin zeigen sie FST-Werte, welche den Standards der Luftfahrtindustrie entsprechen.

Durch ihre hohen Anteile an Pigmenten weisen die erfindungsgemäßen Beschichtungsstoffe eine hohe Deckfähigkeit auf, so dass schon die Applikation einer einzigen Schicht auf die Oberfläche eines Bauteils ein gutes Ergebnis erzielt. Die erfindungsgemäßen Beschichtungsstoffe können daher zum Aufbau von Beschichtungssystemen verwendet werden, welche nur eine Schicht, maximal zwei Schichten, umfassen.

In einer bevorzugten Ausführungsform werden die erfindungsgemäßen Beschichtungssysteme als Lackierung von Bauteilen verwendet insbesondere als Lackierung von Interieurbauteilen. Dabei werden die Schichten aus den erfindungsgemäßen Beschichtungsstoffen durch Aushärten mittels IR-Strahlung hergestellt. Erfindungsgemäß bevorzugt wird das zweischichtige System zur Herstellung von strukturierten Oberflächen eingesetzt. Die erfindungsgemäßen Beschichtungsstoffe können direkt auf die Bauteiloberfläche appliziert werden, ohne dass eine Vorbehandlung der Substrat- oder Bauteiloberfläche erforderlich ist (DTS-Verfahren: direct to substrate).

Bevorzugt weist das erfindungsgemäße Beschichtungssystem eine Schichtdicke bis 150 µm auf.

In einer weiteren bevorzugten Ausführungsform werden die erfindungsgemäßen Beschichtungen als Inmould-Coating für faserverstärkte Bauteile in Monolith- oder Sandwichbauweise eingesetzt. Dabei wird der erfindungsgemäße Beschichtungsstoff auf die Innenfläche einer gereinigten und mit Trennmittel versehenen Form appliziert und getrocknet. Darauf werden Prepregs, bevorzugt Phenol-Aldehyd-Harz getränkte Prepregs, in die Form einlamiert und der erhaltene Aufbau ausgehärtet, bevorzugt im Autoklav-Verfahren. Die Trocknung der erfindungsgemäßen Beschichtung erfolgt bei 80 bis 110 °C über einen Zeitraum von 5 bis 10 Minuten. Nach dem Einlamieren der Prepregs wird der erhaltene Aufbau beispielsweise bei Drucken von 3 bar und Temperaturen von 128 bis 135 °C in einem Zeitraum von 70 Minuten ausgehärtet.

Gegenüber den bisher eingesetzten vierschichtigen Systemen weisen die erfindungsgemäßen Beschichtungssyteme durch Materialeinsparung ein erheblich geringeres Gewicht auf. Durch die geringere Anzahl der Schichten, die jeweils appliziert und ausgehärtet werden müssen, können die erfindungsgemäßen Beschichtungen darüber hinaus auch mit deutlich verkürzten Prozesszeiten hergestellt werden.

Das erfindungsgemäße Beschichtungssystem kann auf metallischen und nicht metallischen Oberflächen von Interieurbauteilen von Fahrzeugen eingesetzt werden. Üblicherweise werden zum Ausbau oder zur Verkleidung von Fahrzeuginnenräumen Interieurbauteile verwendet aus thermoplastischen Kunststoffen wie beispielsweise Polyetherimid PEI, Polyphenylsulfon PPSU, Polycarbonat PC und Polyetherketonketon PEKK, aus Metallen wie beispielsweise Aluminium oder Aluminiumlegierungen und aus glas- oder kohlefaserverstärkten Faserverbundwerkstoffen in Monolith- oder Sandwich-Bauweise, wobei Sandwichbauteile z.B. einen Wabenkern aus phenolharzgetränktem Papier und Prepregauflagen aus phenolharzgetränkten Glasfasermatten aufweisen.

Die oberste Schicht des erfindungsgemäßen Beschichtungssystems kann mit den üblichen Inkjet-Druckverfahren bedruckt werden, um farbige Muster, Dekore oder Bilder auf der Oberfläche anzubringen. Zum Schutz der Muster kann die bedruckte Oberfläche abschließend mit den üblichen FST-gerechten Klarlacken lackiert werden.

Das erfindungsgemäße Beschichtungssystem kann auf allen eingesetzten Bauteilen bzw. Substraten zur Dekorierung der Oberfläche verwendet werden. Das Brandverhalten der erfindungsgemäß erhaltenen, dekorierten Oberflächen zeigt die geforderten FST-Eigenschaften und entspricht den im Personentransport üblichen Brandschutzanforderungen. Weiterhin zeigen die erfindungsgemäßen Oberflächen eine hohe Abriebfestigkeit und Kratzbeständigkeit sowie eine gute Reinigungsfähigkeit.

Bevorzugt wird das erfindungsgemäße Beschichtungssystem auf die nach dem Einbau sichtbaren Oberflächen eines Interieurbauteils appliziert. Solche Bauteile sind zum Beispiel Hatrackklappen, Deckenteile, Stauschränke insbesondere deren Türen und Seitenwände, Trennwände, Lichtbandabdeckungen (Cove Light Panels), Türen und Türrahmen-Verkleidungen, Handläufe, Bedienungselemente für Passagiere (Passengers Service Unit PSU) und Fensterpaneele. Besonders bevorzugt werden die erfindungsgemäßen Beschichtungssysteme zur Dekorierung von Interieurbauteilen aus Faserverbundwerkstoffen in Monolith- oder Sandwich-Bauweise eingesetzt, wie sie üblicherweise zum Innenausbau in Flugzeugen oder Eisenbahnwaggons verwendet werden.

Die der vorliegenden Erfindung zugrunde liegende Aufgabe wird auch durch ein Verfahren zur Beschichtung eines Interieurbauteil gelöst. Dabei wird in Schritt a) ein erfindungsgemäßer Beschichtungsstoff auf die Oberfläche eines Bauteils aufgetragen und in Schritt b) mittels IR-oder Konvektionstrockung zu einer ersten Schicht ausgehärtet. Bevorzugt werden die erfindungsgemäßen Beschichtungsstoffe im pneumatischen Druckluftspritzverfahren oder mit elektrostatischen Lackapplikationsverfahren ESTA auf die Bauteiloberfläche aufgetragen. Im Druckluftspritzverfahren wird beispielsweise bei einem Druck von 3 bar mit Düsen von 1,6 bis 1,8 mm gearbeitet. Im elektrostatischen Applikationsverfahren wird beispielsweise bei 50 mA mit einem Materialdruck von 2,3 bis 2,5 bar und einem Zerstäuberluftdruck von 3 bis 4 bar gearbeitet.

Die zu beschichtenden Bauteile müssen frei von Trennmitteln und anderen Verunreinigungen sein. Dazu können sie vor der Applikation der ersten Schicht mit Hilfe von Kaltreinigern wie zum Beispiel Isopropanol gereinigt werden. Gegebenenfalls werden die Bauteile vor der Applikation der ersten Schicht mit einem Leitprimer beschichtet. Insbesondere Bauteile aus Faserverbundwerkstoffen oder HT-Thermoplasten, die im ESTA-Verfahren beschichtet werden sollen, werden mit einer Leitprimerschicht versehen. Als Leitprimer werden dabei Lacksysteme bezeichnet, welche leitfähige Oberflächen erzeugen, wie sie bei elektrostatischen Applikationsverfahren zwingend notwendig sind.

Gegebenenfalls können weitere Vorbehandlungen zur Glättung der zu beschichtenden Oberflächen erforderlich sein, beispielsweise durch Spachteln. Insbesondere Interieurbauteile aus Faserverbundwerkstoffen in Monolith- oder Sandwich-Bauweise oder Bauteile aus Thermoplasten können vor allem im Kanten- und Sichtbereich Lunker, also Hohlräume, die bei der Erstarrung von Thermoplasten oder bei der Aushärtung einer duromeren Harzmatrix auftreten können, aufweisen, die vor der Beschichtung durch Applizieren, Aushärten und Glattschleifen einer Spachtelschicht ausgeglichen oder aufgefüllt werden müssen.

Die aufgetragenen Beschichtungsstoffe können durch Konvektionstrockung oder IR-Trocknung ausgehärtet werden. Bei der Konvektionstrockung werden die Schichten zunächst 5 bis 30 Minuten, bevorzugt 15 bis 20 Minuten, besonders bevorzugt ca. 20 Minuten, bei Raumtemperatur abgelüftet und anschließend bei 80 bis 110 °C, bevorzugt bei ca. 100 °C 30 bis 90 Minuten, bevorzugt 45 bis 75, besonders bevorzugt ca. 60 Minuten, ausgehärtet.

Um eine strukturierte Oberfläche zu erhalten, wird auf die ausgehärtete erste Schicht in Schritt c) eine weitere Schicht eines erfindungsgemäßen Beschichtungsstoffs appliziert und in Schritt d) ebenfalls mittels IR- oder Konvektionstrockung ausgehärtet. Bevorzugt werden die erfindungsgemäßen Beschichtungsstoffe der zweiten Schicht mit dem gleichen Verfahren appliziert wie die erste Schicht. In elektrostatischen Applikationsverfahren wird dabei wie zur Auftragung der ersten Schicht bei 50 mA mit Materialdruck von 2,3 bis 2,5 bar gearbeitet. Im pneumatischen Druckluftspritzverfahren wird dabei ebenfalls wie zur Auftragung der ersten Schicht mit Düsen von 1,6 bis 1,8 mm bei 3 bar gearbeitet und einem Zerstäuberluftdruck von 3 bis 4 bar gearbeitet. Zur Erzielung einer strukturierten Oberfläche wird der Zerstäuberluftdruck auf 0,4 bar reduziert.

Das erfindungsgemäße ausgehärtete Beschichtungssystem weist somit eine Gesamttrockenschichtdicke von 80 µm bis 110 µm auf. Die mit den üblichen Beschichtungsverfahren erhaltenen Beschichtungssysteme weisen deutlich höhere Trockenschichtdicken von 100 µm bis 190 µm auf. Um die erforderlichen FST-Eigenschaften des Beschichtungssystems zu erreichen, müssen hier zusätzlich zu der Applikation und Aushärtung der üblichen Decklackschichten zumindest weitere zwei Brandschutzfüllerschichten appliziert und ausgehärtet werden.

In einem weiteren Verfahrensschritt können farbige Muster, Dekore oder Bilder mit den üblichen Inkjet-Druckverfahren auf das ausgehärtete Beschichtungssystem gedruckt werden, wobei diese Musterschicht mittels UV-Strahlung ausgehärtet bzw. getrocknet wird. Zum Schutz der Musterschicht vor schädlichen Einwirkungen wie z.B. Feuchtigkeit, mechanische Beanspruchungen oder Verunreinigungen kann eine abschließende Schutzschicht aufgebracht werden. Dazu eignen sich FST-gerechte Klarlacke, die in 10 bis 20 µm Trockenschicht aufgebracht werden. Die Applikation kann beispielsweise in Airmix-Verfahren, einem Verfahren zur Applikation durch hydraulisches Spritzen mit Luftunterstützung, erfolgen. Die aufgebrachte Schicht kann mittels Konvektionswärme, IR-Strahlung oder UV-Strahlung ausgehärtet bzw. getrocknet werden. Diese zusätzliche Klarlackschicht verbessert die Kratzbeständigkeit, die Abriebsfestigkeit sowie die Reinigungsfähigkeit des Beschichtungssystems.

### Beispiele

### Beispiel 1

**Zusammensetzung eines erfindungsgemäßen Decklacks**

| Anteil in Gew.-% | Rohstoff |
|---|---|
| 13 | Polyesterpolyol |
| 5,5 | methanolverethertes Melamin-Formaldehydharz |
| 2 | Dinonylnaphthalindisulfonsäure |
| 35 | Flammschutzmittel Al(OH)₃ |
| 25 | Pigment TiO₂ |
| 2 | Haftvermittler |
| 1 | Netzmittel |
| 5 | Rheologieadditiv |
| 11,5 | organische Lösemittel |

Als Substrat A wurden Sandwichpaneele mit einem Wabenkern aus phenolharzgetränktem Papier und mit Deckschichten aus mit Phenolharz imprägnierten Glasfasergewebe eingesetzt. Weiterhin wurden grundierte Aluminiumplatten als Substrat B verwendet. Zur Herstellung der Probekörper wurden 100 Gewichtsteile der Rezeptur gemäß Beispiel 1 mit 10 Gewichtsteilen Butylacetat als Spritzverdünner vermischt. Die so erhaltene Mischung wurde in folgenden Schritten auf die Substrate A und B auflackiert. Eine erste, glatte Schicht wurde mittels Becherpistole auf die Substratoberfläche aufgebracht. Die aufgebrachte Schicht wurde 15 Minuten bei Raumtemperatur RT abgelüftet und anschließend 10 Minuten bei 100 °C getrocknet. Auf die ausgehärtete Schicht wurde die Mischung in einer zweiten, strukturbildende Schicht mittels Becherpistole aufgebracht. Anschließend wurden die erste und die zweite Schicht 60 Minuten bei 100 °zu einer Beschichtung ausgehärtet. Anschließend wurden die so erhaltenen Probekörper nach Beispiel 1A und Beispiel 1B auf Chemikalienbeständigkeit, Reinigungsfähigkeit, Abriebbeständigkeit und ihr Brandverhalten geprüft.

### Beispiel 2

Als Vergleichsbeispiel wurde ein handelsüblicher, zweikomponentiger Decklack auf Basis von Polyurethan und ein handelsüblicher Füller verwendet, wie sie üblicherweise zur Lackierung von Interieurbauteilen im Luftfahrtbereich eingesetzt werden. Als Substrat A wurden ebenfalls Sandwichpaneele mit einem Wabenkern aus phenolharzgetränktem Papier und mit Deckschichten aus mit Phenolharz imprägnierten Glasfasergewebe eingesetzt. Grundierte Aluminiumplatten wurden als Substrat B verwendet.

Zur Herstellung der Probekörper wurden die Füller- und Decklacke nach dem bisher üblichen Verfahren auf die Substratoberflächen auflackiert. Zunächst wurde dazu eine erste Füllerschicht aufgebracht, die aufgebrachte Schicht 60 Minuten bei Raumtemperatur abgelüftet und dann weitere 60 Minuten bei 60 °C ausgehärtet. Die ausgehärtete Füllerschicht wurde geschliffen. Auf die abgeschliffene erste Füllerschicht wurde eine zweite Füllerschicht aufgebracht, 60 Minuten bei Raumtemperatur abgelüftet und dann weitere 60 Minuten bei 50 °C ausgehärtet. Der ausgehärtete Schichtaufbau wurde anschließend auf eine Rest-Trockenschichtdicke von ca. 50 µm abgeschliffen. Auf die Füllerschichten wurde dann eine erste, glatte Decklackschicht appliziert und 60 Minuten abgelüftet. Danach wurde eine zweite, strukturbildende Decklackschicht aufgebracht und 60 Minuten abgelüftet. Anschließend wurde der gesamte Schichtaufbau 120 Minuten bei 60 °C ausgehärtet. Die so erhaltenen Probekörper nach Beispiel 2A und Beispiel 2B wurden auf Chemikalienbeständigkeit, Reinigungsfähigkeit, Abriebbeständigkeit und ihr Brandverhalten geprüft.

### Prüfmethoden

### Bestimmung der Chemikalienbeständigkeit:

Als Probekörper für diese Prüfung wurden grundierte Aluminiumplatten mit dem zu prüfenden Beschichtungsaufbau eingesetzt. Es wurde die Beständigkeit eine Lösung von 5 Gewichtsprozent des Reinigungsmittels Turco 5948-DPM, (Hersteller: Henkel KG) in Leitungswasser geprüft. Die Probekörper wurden bei 23°C für 168 Stunden die Lösung des Reinigungsmittels vollständig eingetaucht gelagert. Danach wurden die Probekörper abgewischt und 24 Stunden bei 23°C und 50% relativer Luftfeuchte konditioniert. Anschließend wurde die Kratzbeständigkeit der so behandelten Beschichtung bestimmt. Dabei wurde ein mit einem Gewicht belasteter Ritzstichel, mit der Spitze auf die zu prüfende Beschichtung aufgesetzt senkrecht auf der zu prüfenden Fläche stehend über die Fläche gezogen. Anschließend wurde visuell beurteilt, ob die geprüfte Beschichtung eine Kratzspur aufweist. Die maximale Masse des Gewichtes mit dem der Ritzstichel belastet werden kann ohne, dass die Beschichtung bei der Prüfung verletzt wird, ist ein Maß für die Kratzbeständigkeit der Beschichtung.

### Bestimmung der Reinigungsfähigkeit:

Zur Prüfung der Reinigungsfähigkeit von Beschichtungen wurden auf die Oberfläche der Beschichtungen verschmutzende Medien aufgebracht. Als verschmutzende Medien wurden Kugelschreibertinte, Filzstifttinte, Inkjetdruckertinte und Lippenstift, eingesetzt. Die verschmutzenden Medien ließ man 24 Stunden lang bei 23°C auf die Beschichtung einwirken. Danach wurde die Oberfläche der Beschichtung unter Verwendung einer weichen Bürste mit einer Lösung von 5 Gewichtsprozent des Reinigungsmittels Turco 5948-DPM, (Hersteller: Henkel KG) in Leitungswasser gereinigt und anschließend visuell beurteilt. Die Beschichtung wurde bezüglich des verschmutzenden Mediums als Reinigungsfähig bewertet, wenn nach der Reinigung keine Verfärbung oder Veränderung ihrer Oberfläche festzustellen war. Als Probekörper für diese Prüfung wurden Sandwichpaneele mit dem zu prüfenden Beschichtungsaufbau eingesetzt. Die Beurteilung wurde nach folgendem Schema durchgeführt:
++ = keine Verfärbung oder Veränderung,
+ = sehr geringfügige Verfärbung oder Veränderung,
o = geringfügige Verfärbung oder Veränderung,
- = Verfärbung oder Veränderung,
-- = starke Verfärbung und Veränderung.

### Bestimmung der Abriebbeständigkeit:

Die Abriebbeständigkeit der Beschichtungen wurde mit dem Taber Abraser unter Verwendung von Reibrollen Typ CS 10, die mit Gewichten mit einer Masse von 250 g beschwert waren und in jeweils 500 Umdrehungen über den Probekörper geführt wurden, geprüft. Der Abrieb wurde gravimetrisch bestimmt. Als Probekörper für diese Prüfung wurden grundierte Aluminiumplatten mit dem zu prüfenden Beschichtungsaufbau eingesetzt.

### Prüfung des Brandverhaltens:

Alle Prüfung des Brandverhaltens wurden gemäß den Vorschriften der Luftfahrtbundesbehörde der Vereinigten Staaten von Amerika durchgeführt (s. Code of Federal Regulations 14 CFR Ch. I (1-1-92) Federal Aviation Administration, U.S. Department of Transportation).

### Entflammbarkeit

Die Entflammbarkeit der Beschichtungen wurde nach Pt. 25 App. F part. I Absatz 5 geprüft indem ein horizontal angeordneter beschichteter Probekörper 60 Sekunden lang mit einem Gasbrenner beflammt wurde. Anschließend wurde die Länge Strecke bestimmt, auf die Beschichtung abgebrannt war (Brandlänge). Darüber hinaus wurde die Zeitdauer bestimmt, innerhalb der nach dem Entfernen des Gasbrenners die Beschichtung weiter brennt (Nachbrennzeit) oder brennendes Material vom Probekörper abtropft (Nachtropfzeit). Als Probekörper für diese Prüfung wurden Sandwichpaneele mit dem zu prüfenden Beschichtungsaufbau eingesetzt.

### Spezifische Rauchgasdichte

Die spezifische optische Rauchgasdichte der beim Verbrennen der Beschichtung entstehenden Rauchgase wurde nach Pt. 25 App. F part. V bestimmt. Als Probekörper für diese Prüfung wurden Sandwichpaneele mit dem zu prüfenden Beschichtungsaufbau eingesetzt.

### Rauchgaszusammensetzung

Die Zusammensetzung der beim Verbrennen der Beschichtungen entstehenden Rauchgase auf toxische Inhaltsstoffe untersucht. Dazu wurde der im Rahmen der oben genannten Prüfung der spezifischen optischen Rauchgasdichte entstehende Rauch untersucht und die Konzentration von Cyanwasserstoff (HCN), Kohlenstoffmonoxid (CO), nitrosen Gasen (NOₓ), Schwefeldioxid (SO₂) und Fluorwasserstoff (HF) im Rauchgas bestimmt. Als Probekörper für diese Prüfung wurden Sandwichpaneele mit dem zu prüfenden Beschichtungsaufbau eingesetzt.

### Wärmefreisetzung

Die Wärmefreisetzung wurde nach Pt. 25 App. F part. IV bestimmt. Dabei wurde die beim Verbrennen der Beschichtung auftretende der Gesamtwärmefreisetzung sowie die maximal auftretenden Heizleistung gemessen. Als Probekörper für diese Prüfung wurden Sandwichpaneele und Aluminiumplatten mit dem zu prüfenden Beschichtungsaufbau eingesetzt.

### Ergebnisse

**Kratzbeständigkeit:**

| | Beispiel 1 | | Beispiel 2 | |
|---|---|---|---|---|
| Substrat Typ | A | B | A | B |
| Last ohne Kratzspur [g] | k.M.* | 5000 | k.M. | 5000 |

| | | | | |
|---|---|---|---|---|
| *k.M. : es wurde keine Messung durchgeführt | | | | |

**Chemikalienbeständigkeit:**

| | Beispiel 1 | | Beispiel 2 | |
|---|---|---|---|---|
| Substrat Typ | A | B | A | B |
| Belastendes Medium | k.M.* | Turco 5948-DPM Lösung | k.M. | Turco 5948-DPM Lösung |
| Last ohne Kratzspur [g] | k.M. | 3250 | k.M. | 3000 |

| | | | | |
|---|---|---|---|---|
| *k.M. : es wurde keine Messung durchgeführt | | | | |

**Reinigungsfähigkeit:**

| | Beispiel 1 | | Beispiel 2 | |
|---|---|---|---|---|
| Substrat Typ | A | B | A | B |
| Kugelschreibertinte | ++ | k.M.* | O | k.M. |
| Filzstifttinte | ++ | k.M. | O | k.M. |
| Inkjetdruckertinte | ++ | k.M. | + | k.M. |
| Lippenstift | ++ | k.M. | ++ | k.M. |

| | | | | |
|---|---|---|---|---|
| *k.M. : es wurde keine Messung durchgeführt | | | | |

**Abriebbeständigkeit:**

| | Beispiel 1 | | Beispiel 2 | |
|---|---|---|---|---|
| Substrat Typ | A | B | A | B |
| Abrieb bei 500 Umdrehungen [mg] | k.M.* | 18 | k.M. | 19 |

| | | | | |
|---|---|---|---|---|
| *k.M. : es wurde keine Messung durchgeführt | | | | |

### Prüfungen zum Brandverhalten

**Entflammbarkeit:**

| | Beispiel 1 | | Beispiel 2 | |
|---|---|---|---|---|
| Substrat Typ | A | B | A | B |
| Brandlänge [mm] | 94 | k.M.* | 95 | k.M. |
| Nachbrennzeit [s] | 5 | k.M. | 7 | k.M. |
| Nachtropfzeit [s] | 0 | k.M. | 0 | k.M. |

| | | | | |
|---|---|---|---|---|
| *k.M. : es wurde keine Messung durchgeführt | | | | |

**Spezifische Rauchgasdichte:**

| | Beispiel 1 | | Beispiel 2 | |
|---|---|---|---|---|
| Substrat Typ | A | B | A | B |
| Spezifische Rauchgasdichte | 21 | k.M.* | 26 | k.M. |

| | | | | |
|---|---|---|---|---|
| *k.M. : es wurde keine Messung durchgeführt | | | | |

**Wärmefreisetzung:**

| | Beispiel 1 | | Beispiel 2 | |
|---|---|---|---|---|
| Substrat Typ | A | B | A | B |
| Gesamtwärmefreisetzung [kW/m²] | 41,17 | 19,82 | 55,38 | 21,03 |
| Maximale Heizleistung [kW*min/m²] | 37,05 | 14, 05 | 44,94 | 14,50 |

**Rauchgaszusammensetzung:**

| | Beispiel 1 | | Beispiel 2 | |
|---|---|---|---|---|
| Substrat Typ | A | B | A | B |
| c(HCN) [ppm] | 2 | k.M.* | 0,19 | k.M. |
| c(CO) [ppm] | 91 | k.M. | 1509,4 | k.M. |
| c(NO_{X}) [ppm] | 6 | k.M. | 2,26 | k.M. |
| c(SO₂) [ppm] | 4 | k.M. | 0 | k.M. |
| c (HF) [ppm] | 0 | k.M. | 0 | k.M. |

| | | | | |
|---|---|---|---|---|
| *k.M. : es wurde keine Messung durchgeführt | | | | |

## Patentansprüche

1. Beschichtungsstoff enthaltend
10 bis 30 Gew.-% Polyole,
2 bis 15 Gew.-% veretherte Melamin-Formaldehyd-Harze,
0,1 bis 10 Gew.-% Säurekatalysatoren und
hinreichende Mengen an Flammschutzmitteln, oder an Flammschutzmitteln und Füllstoffen oder an Flammschutzmitteln und Pigmenten oder an Flammschutzmitteln, Füllstoffen und Pigmenten, um einen Füllgrad im Bereich von 60 bis 80 Gew.-% bezogen auf die Gesamtmasse des Beschichtungsstoffs zu erreichten,
wobei die Flammschutzmittel ausgewählt sind aus der Gruppe enthaltend anorganische Flammschutzmittel, halogen-, stickstoff- und borhaltige Flammschutzmittel, intumeszierende Flammschutzmittel oder deren Gemische.

2. Beschichtungsstoff gemäß Anspruch 1 **dadurch gekennzeichnet, dass** der Beschichtungsstoff hinreichende Mengen an Flammschutzmitteln, Füllstoffen und/oder Pigmenten aufweist, um einen Füllgrad von 65 bis 75 Gew.-% zu erreichen.

3. Beschichtungsstoff gemäß einem der Ansprüche 1 oder 2, **dadurch gekennzeichnet, dass** die Polyole ausgewählt sind aus der Gruppe enthaltend Polyacrylat-Polyole, Polyester-Polyole, Polyether-Polyole, Polycarbonat-Polyole, Polycaprolactone und Polyurethanpolyole.

4. Beschichtungsstoff gemäß einem der voranstehenden Absprüche, **dadurch gekennzeichnet, dass** die veretherten Melamin-Formaldehyd-Harze ausgewählt sind aus der Gruppe enthaltend methanolveretherte Melamin-Formaldehyd-Harze, ethanolveretherte Melamin-Formaldehyd-Harze, propanolveretherte Melamin-Formaldehyd-Harze, iso-butanolveretherte Melamin-Formaldehyd-Harze und n-butanolveretherte Melamin-Formaldehyd-Harze.

5. Beschichtungsstoff gemäß einem der voranstehenden Ansprüche, **dadurch gekennzeichnet, dass** die Säurekatalysatoren ausgewählt sind aus der Gruppe enthaltend starke Broenstedt-Säuren, bevorzugt organische Sulfonsäuren.

6. Beschichtungsstoff gemäß einem der voranstehenden Ansprüche, **dadurch gekennzeichnet, dass** die Füllstoffe ausgewählt sind aus der Gruppe enthaltend Carbonate, Sulfate, Silikate, Kieselsäuren und Oxide.

7. Beschichtungsstoff gemäß einem der voranstehenden Ansprüche, **dadurch gekennzeichnet, dass** die Pigmente anorganische Pigmente sind.

8. Beschichtungsstoff nach einem der voranstehenden Ansprüche, **dadurch gekennzeichnet, dass** der Beschichtungsstoff weiterhin nichtionische Silberpartikel enthält.

9. Verwendung eines Beschichtungsstoffs gemäß einem der Ansprüche 1 bis 8 zur Herstellung von Beschichtungssystemen auf der Oberfläche von Interieurbauteilen.

10. Verwendung gemäß Anspruch 9, **dadurch gekennzeichnet, dass** die Beschichtungssysteme als Lackierung von Interieurbauteilen aus thermoplastischen Kunststoffen, glas- oder kohlefaserverstärkten Faserverbundwerkstoffen in Monolith- oder Sandwich-Bauweise und Metall eingesetzt werden.

11. Verwendung gemäß Anspruch 9, **dadurch gekennzeichnet, dass** die Beschichtungssysteme als Inmould-Coating für Interieurbauteile aus glas- oder kohlefaserverstärkten Faserverbundwerkstoffen in Monolith- oder Sandwich-Bauweise eingesetzt werden.

12. Verfahren zur Herstellung eines beschichteten Bauteils **dadurch gekennzeichnet, dass**
a) ein Beschichtungsstoff gemäß einem der Ansprüche 1 bis 8 auf die Oberfläche des Bauteils appliziert wird, und
b) der applizierte Beschichtungsstoffs zu einer Schicht mittels IR- oder Konvektionstrocknung ausgehärtet wird.

13. Verfahren gemäß Anspruch 12, **dadurch gekennzeichnet, dass**
c) eine weitere Schicht des Beschichtungsstoffs auf die erste Schicht appliziert wird, und
d) der applizierte Beschichtungsstoff zu einer zweiten Schicht mittels IR- oder Konvektionstrocknung ausgehärtet wird.

14. Verfahren gemäß einem der Ansprüche 12 oder 13,
**dadurch gekennzeichnet, dass** die Beschichtungsstoffe 5 bis 90 Minuten bei einer Temperatur von 80 bis 110 C ausgehärtet werden.

15. Verfahren gemäß einem der Ansprüche 12 bis 14,
**dadurch gekennzeichnet, dass** weiterhin
e) die oberste Schicht des ausgehärteten Beschichtungssystem mittels Inkjet-Verfahren bedruckt wird.

16. Verfahren gemäß Anspruch 15, **dadurch gekennzeichnet, dass** weiterhin
f) auf die mittels Inkjet-Verfahren bedruckte Oberfläche ein FST-gerechter Klarlack appliziert und ausgehärtet wird.

17. Interieurbauteil für Fahrzeuge zum Personentransport, **dadurch gekennzeichnet, dass** es auf seiner Oberfläche zumindest eine Beschichtung hergestellt aus einem Beschichtungsstoff gemäß einem der Ansprüche 1 bis 8 aufweist.

## Claims

1. A coating material comprising
10 to 30 % by weight of polyols,
2 to 15% by weight of etherified melamine-formaldehyde resins,
0.1 to 10% by weight of acid catalysts and
sufficient amounts of flame retardants or flame retardants and fillers or flame retardants and pigments or flame retardants, fillers and pigments to achieve a degree of filling in the range from 60 to 80% by weight, based on the total weight of the coating material to be achieved,
the flame retardants being selected from the group comprising inorganic flame retardants, flame retardants containing halogen, nitrogen and boron, intumescent flame retardants or mixtures thereof.

2. A coating material according to claim 1 **characterized in that** the coating material contains sufficient amounts of flame retardants, fillers and/or pigments, in order to achieve a filling level of 65 to 75 % by weight.

3. A coating material according to one of the claims 1 or 2, **characterised in that** the polyols are chosen from the group consisting of polyacrylate polyols, polyester polyols, polyether polyols, polycarbonate polyols, polycaprolactone and polyurethane polyols.

4. A coating material according to one of the previous claims, **characterised in that** the etherified melamine-formaldehyde resins are chosen from the group comprising methanol-melamine-formaldehyde resins, ethanol etherified melamine-formaldehyde resins, propanol etherified melamine-formaldehyde resins, iso-hutanol-etherified melamine-formaldehyde resins and n-butanol-etherifled melamine-formaldehyde resins.

5. A coating material according to one of the previous claims, **characterised in that** the acid catalysts are chosen from the group comprising strong Broensted acids, preferably organic sulfonic acids.

6. A coating material according to one of the previous claims, **characterised in that** the fillers are chosen from the group comprising carbonate, sulfates, silicates, silica and oxides.

7. A coating material according to one of the previous claims, **characterised in that** the pigments are inorganic pigments.

8. A coating material according to one of the previous claims, **characterised in that** the coating material further contains non-ionic silver particles.

9. The use of a coating material according to one of the claims 1 to 8 for the production of coating systems on the surface of interior components.

10. The use according to claim 9, **characterised in that** the coating systems can be used for varnishing of interior components made of thermoplastics, glass or carbon fibre-reinforced fiber composites in monolithic or sandwich construction and metal.

11. The use according to claim 9, **characterised in that** the coating systems can be used for inmould coating for interior components made of glass or carbon fibre-reinforced fiber composites in monolithic or sandwich construction.

12. A process for producing a coated component, **characterised in that**
a) a coating material according to one of claims 1 to 8 is applied to the surface of the component, and
b) the applied coating material is cured to a layer by means of IR or convection drying.

13. A method according to claim 12, **characterised in that** c) a further layer of the coating material is applied to the first layer, and
d) the applied coating material is cured to a second layer by means of IR or convection drying.

14. A process according to one of the claims 12 or 13, **characterised in that** the coating materials are cured 5 to 90 minutes at a temperature of 80 to 110°C.

15. A method according to any of the claims 12 to 14, **characterised in that** furthermore
e) the top layer of the cured coating system is printed by means of inkjet process.

16. A method according to claim 15, **characterised in that** furthermore
f) an FST-compatible clear lacquer is applied to the ink-printed surface and cured.

17. The interior component for vehicles for the transport of passengers, **characterised in that** it has on its surface at least one coating made of a coating material according to one of the claims 1 to 8.

## Revendications

1. Matériau de revêtement comprenant
10 à 30% en poids de polyols,
2 à 15% en poids de résines mélamine-formaldéhyde éthérifiées,
0,1 à 10% en poids de catalyseurs acides et
des quantités suffisantes de retardateurs de flamme ou de retardateurs de flamme et de matériaux de remplissage ou retardateurs de flammes et pigments ou retardateurs de flammes, matériaux de remplissage et pigments pour obtenir un degré de remplissage compris entre 60 et 80% en poids, par rapport au poids total du matériau de revêtement à atteindre,
les retardateurs de flamme étant choisis dans le groupe comprenant des retardateurs de flamme inorganiques, des retardateurs de flammes contenant des halogènes, de l'azote et du bore, des retardateurs de flamme intumescents ou des mélanges de ceux-ci.

2. Matériau de revêtement selon la revendication 1, **caractérisé en ce que** le matériau de revêtement contient des quantités suffisantes de retardateurs de flammes, des matériaux de remplissage et/ou des pigments, pour atteindre un niveau de remplissage de 65 à 75 % en poids.

3. Matériau de revêtement selon l'une des revendications 1 ou 2, **caractérisé en ce que** les polyols sont choisis dans le groupe comprenant les polyols de polyacrylate, les polyols de polyester, les polyols de polyéther, les polyols de polycarbonate, les polyols de polycaprolactone et de polyuréthane.

4. Matériau de revêtement selon l'une des revendications précédentes, **caractérisé en ce que** les résines de mélamine-formaldéhyde éthérifiées sont choisies dans le groupe comprenant les résines de méthanol-mélamine-formaldéhyde, les résines de mélamine-formaldéhyde éthérifiées d'éthanol, les résines de mélamine-formaldéhyde éthérifiées de propanol, les résines de mélamine-formaldéhyde éthérifiées d'iso-butanol et les résines de mélamine-formaldéhyde éthérifiées de n-butanol.

5. Matériau de revêtement selon l'une des revendications précédentes, **caractérisé en ce que** les catalyseurs acides sont choisis dans le groupe comprenant les forts acides de Bronsted, de préférence les acides sulfoniques organiques.

6. Matériau de revêtement selon l'une des revendications précédentes, **caractérisé en ce que** les matériaux de remplissage sont choisis dans le groupe comprenant les carbonates, les sulfates, les silicates, la silice et les oxydes.

7. Matériau de revêtement selon l'une des revendications précédentes, **caractérisé en ce que** les pigments sont des pigments inorganiques.

8. Matériau de revêtement selon l'une des revendications précédentes, **caractérisé en ce que** le matériau de revêtement contient en outre des particules d'argent non-ioniques.

9. Utilisation du matériau de revêtement selon l'une des revendications 1 à 8 pour la production de systèmes de revêtement à la surface des composants intérieurs.

10. Utilisation selon la revendication 9, **caractérisé en ce que** le système de revêtement peut s'utiliser pour le laquage des composants intérieurs en thermoplastiques, en verre ou en composites de fibre renforcés de fibre de carbone dans une construction monolithique ou sandwich et métal.

11. Utilisation selon la revendication 9, **caractérisé en ce que** les systèmes de revêtement peuvent s'utiliser pour le revêtement surmoulé des composants intérieurs en verre ou en composites de fibre renforcés de fibre de carbone dans une construction monolithique ou sandwich.

12. Procédé de fabrication de composant revêtu, **caractérisé en ce que**
a) un matériau de revêtement selon l'une des revendications 1 à 8 est appliqué à la surface du composant, et
b) le matériau de revêtement appliqué est vulcanisé pour obtenir une couche par séchage IR ou à convexion.

13. Procédé selon la revendication 12, **caractérisé en ce que**,
c) l'on applique une couche supplémentaire du matériau de revêtement sur la première couche, et
d) le matériau de revêtement appliqué est vulcanisé pour obtenir une seconde couche par séchage IR ou à convexion.

14. Procédé selon l'une des revendications 12 ou 13, **caractérisé en ce que** les matériaux de revêtement sont vulcanisés pendant 5 à 90 minutes à une température de 80 à 110°C.

15. Procédé selon l'une quelconque des revendications 12 à 14, **caractérisé en ce qu'**en outre
e) la couche supérieure du système de revêtement vulcanisé est imprimée par un procédé à jet d'encre.

16. Procédé selon la revendication 15, **caractérisé en ce qu'**en outre
f) l'on applique un vernis transparent compatible FST à la surface imprimée par encre, avant vulcanisation.

17. Composant intérieur pour véhicules destinés au transport de passager, **caractérisé en ce qu'**il présente à la surface au moins un revêtement constitué d'un matériau de revêtement selon l'une des revendications 1 à 8.
